# EUROPEAN PATENT SPECIFICATION

(11) **EP 3 241 875 B1**
(45) Date of publication and mention of the grant of the patent: **25.03.2020**
(21) Application number: 15875770.8
(22) Date of filing: 31.12.2015
(51) Int. Cl.: C09D 183/14, C09D 163/00, C09D 133/00, C08J 5/18

(54) **RESIN COMPOSITION FOR HARD COATING, AND HARD-COATING FILM COMPRISING CURED FORM OF SAME AS COATING LAYER**
HARZZUSAMMENSETZUNG FÜR HARTBESCHICHTUNG UND HARTBESCHICHTUNGSFILM MIT GEHÄRTETER FORM DAVON ALS BESCHICHTUNG
COMPOSITION DE RÉSINE POUR REVÊTEMENT DUR, ET FILM DE REVÊTEMENT DUR COMPRENANT UNE FORME DURCIE DE CETTE DERNIÈRE EN TANT QUE COUCHE DE REVÊTEMENT

(30) Priority: 31.12.2014 KR 20140196056; 30.12.2015 KR 20150190456; 30.12.2015 KR 20150190471; 30.12.2015 KR 20150190464
(43) Date of publication of application: 08.11.2017
(60) Divisional application: 19193636.8
(73) Proprietor: Kolon Industries, Inc., Seoul 07793 (KR)
(72) Inventor: AHN, Sang Hyun, Yongin-si Gyeonggi-do 446-797 (KR); WOO, Hak Yong, Yongin-si Gyeonggi-do 446-797 (KR); JUNG, Hak Gee, Yongin-si Gyeonggi-do 446-797 (KR); LEE, Dong Hee, Yongin-si Gyeonggi-do 446-797 (KR); AN, Byung Joon, Yongin-si Gyeonggi-do 446-797 (KR); KIM, Hang Geun, Yongin-si Gyeonggi-do 446-797 (KR)
(74) Representative: Ter Meer Steinmeister & Partner
(86) International application number: PCT/KR2015/014594
(87) International publication number: WO 2016/108676

(56) References cited:
- EP-A2- 0 051 966
- DE-A1- 4 205 819
- JP-A- 2005 213 517
- JP-B2- 4 615 641
- KR-A- 20120 098 588
- KR-A- 20140 004 568
- US-A1- 2003 116 273
- DATABASE WPI Week 200904 Thomson Scientific, London, GB; AN 2009-A80798 XP002782229, -& KR 2008 0035218 A 23 April 2008 (2008-04-23)
- DATABASE WPI Week 201351 Thomson Scientific, London, GB; AN 2012-J31072 XP002782230, -& KR 2012 0077459 A (KOREA INST IND TECHNOLOGY) 10 July 2012 (2012-07-10)

## Description

### Technical Field

The present invention relates to a resin composition for a hard coating and a hard coating film including a cured product thereof as a coating layer.

### Background Art

Typically, glass has been used without hesitation as a material for important commercial products, including optical functional products, such as windows for various electronic products, touch screens for computers, lenses, automobile sunroofs, optical screens, light guide plates and LED front plates. However, glass is problematic because it is heavy, easily breaks, and has very high defect rates upon processing of products, and thus thorough research into materials able to overcome the problems with glass is ongoing.

In this situation, a transparent polymer film is mainly utilized as a key material in optical and transparent display industries, and is particularly receiving attention thanks to the light weight and easy processability thereof, in lieu of glass, in display industries. However, a polymer film suffers from low surface hardness and thus poor wear resistance, compared to glass, and thus, a high-hardness coating process for increasing the surface hardness of the polymer film, that is, a hard coating technique, is being discussed as an important issue.

Materials for use in hard coatings may be classified into organic materials, inorganic materials, and organic/inorganic hybrid materials. Here, the organic materials have flexibility and moldability but low surface hardness, and the inorganic materials have high surface hardness and transparency but poor flexibility and moldability. Although organic/inorganic hybrid materials, having the advantages of two materials, are thus receiving great attention at present and thorough research thereto is ongoing, it is still difficult to realize the advantages of the above two materials.

Meanwhile, a photocurable or thermosetting coating agent is typically useful in a hard coating. A photocurable coating agent enables a curing process to be realized within a short time, and also enables curing at room temperature, and is thus used as a coating agent for protecting the surface of various plastic products. In order for such a coating agent to efficiently serve for an optical application, hardness and adhesion to the film have to be high, and curling and a rainbow phenomenon have to be absent. Particularly, curling has to be controlled because it may act as a major drawback in a roll-to-roll process for mass production and may cause durability problems when products are processed. Furthermore, as the display industry enters the flexible display era, there is an essential need for a hard coating film having high flexibility.

With regard to the photocurable or thermosetting coating agent for use in optical products, Korean Patent Application Publication No. 2010-0041992 discloses a high-hardness hard coating film composition including a UV-curable polyurethane acrylate oligomer. The invention disclosed in this patent is able to minimize curling and to prevent a rainbow phenomenon due to light interference, but the problem of low surface hardness of the hard coating film has not been overcome.

Also, International Patent No. WO2013-187699 discloses a high-hardness siloxane resin composition having an alicyclic epoxy group, a preparation method thereof, and an optical film including a cured product thereof. In this conventional technique, high hardness of 9H has been achieved, but weatherability may become problematic due to the use of a cationic initiator and a single monomer, and curling problems still appear. Also the document KR 2012 0077459 A discloses an optical paint prepared from an epoxy-silane, a tetra-alkoxy-silane and an alkoxy metal compound.

When the surface hardness of the hard coating layer is increased by forming the intermolecular dense network in this way, contractility may increase, flexibility may decrease and curling and cracking may occur. Even if flexibility is increased and curling and cracking are solved, surface hardness limitations are still present. Accordingly, the development of a high-hardness coating material, which is highly flexible and has easy processability without curling, is urgently required in order to realize wide application of a polymer film.

### Disclosure

### Technical Problem

Therefore, the present invention is intended to provide a resin composition for a hard coating, which includes, as an organic-inorganic composite, a siloxane resin configured as claimed such that an alkoxysilane having an alicyclic epoxy group and an alkoxy metal are chemically bound, thereby ensuring the space in the molecular structure thereof to thus maintain surface hardness and prevent shrinkage, without curling.

In addition, the present invention is intended to provide a resin composition for a hard coating, which includes the siloxane resin and an epoxy or acrylic resin.

In addition, the present invention is intended to provide a hard coating film, which includes the cured product of the resin composition as a coating layer, thus exhibiting high surface hardness and superior adhesion, wear resistance and bending resistance, without curling.

### Technical Solution

the present invention provides a resin composition for a hard coating, comprising a siloxane resin configured such that compounds including an alkoxysilane of Chemical Formula 1 below and an alkoxy metal compound of Chemical Formula 2 below are chemically bound.

<Chemical Formula 1> R¹ₙSi(OR²)₄₋ₙ

<Chemical Formula 2> M(OR³)ₘ

In Chemical Formulas 1 and 2, R¹ is a linear C₁ to C₃ alkyl group having an alicyclic epoxy group, R² is a linear or branched C₁ to C₄ alkyl group, R³ is a linear or branched C₁ to C₄ alkyl group, M is at least one metal element selected from the group consisting of aluminum, titanium, and zinc, n is an integer of 1 to 3, and m is an integer of 2 to 4.

According to the invention, this siloxane resin does not include a chemically bound alkoxysilane of Chemical Formula 3 below, in addition to the alkoxysilane of Chemical Formula 1 and the alkoxy metal compound of Chemical Formula 2.

<Chemical Formula 3> Si(OR³)₄

In Chemical Formula 3, R³ is a C₁ to C₄ linear or branched alkyl group.

In addition, the present invention provides a resin composition for a hard coating, comprising the siloxane resin claimed as a first component, and, as a second component, at least one of an epoxy resin and an acrylic resin.

In addition, a preferred embodiment of the present invention provides a hard coating film, comprising a substrate film and a hard coating layer formed by curing the resin composition claimed on at least one surface of the substrate film.

### Advantageous Effects

According to the present invention, a resin composition for a hard coating that is prevented from exhibiting curling by inhibiting shrinkage while maintaining superior surface hardness can be provided, and a hard coating film including a coating layer having high surface hardness without curling using the above resin composition can also be provided. In particular, the resin composition of the present invention can ensure an intermolecular space because of chemical bonding of an alkoxy metal in an alicyclic epoxy-based molecule, and thus can minimize curing shrinkage, thus obtaining high surface hardness. When a coating layer is formed using the resin composition, curling of the hard coating film can be effectively prevented.

Moreover, the resin composition of the invention can further include an epoxy or acrylic resin, in addition to the siloxane resin configured such that compounds including the alkoxysilane having an alicyclic epoxy group and the alkoxy metal compound, are chemically bonded, thereby further increasing adhesion and bending resistance.

### Brief Description of Drawing

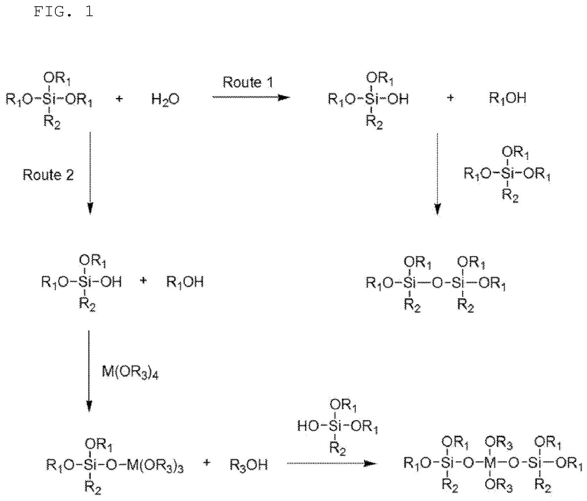

FIG. 1 is a reaction scheme showing the synthesis mechanism through a sol-gel process of a siloxane resin contained in a resin composition for a hard coating according to a first embodiment of the present invention.

### Best Mode

The present invention addresses a resin composition for a hard coating, which includes a siloxane resin configured such that compounds including an alkoxysilane having an alicyclic epoxy group and an alkoxy metal compound are chemically bound.

In the present invention, the alkoxysilane is represented by Chemical Formula 1 below, and in a preferred aspect of the present invention, the alkoxysilane of Chemical Formula 1 is at least one selected from among 2-(3,4-epoxycyclohexyl)ethyltrimethoxysilane, 2-(3,4-epoxycyclohexyl)ethyltriethoxysilane and 2-(3,4-epoxycyclohexyl)ethyltripropoxysilane.

<Chemical Formula 1> R¹ₙSi(OR²)₄₋ₙ

In Chemical Formula 1, R¹ is a linear C₁ to C₃ alkyl group having an alicyclic epoxy group, R² is a linear or branched C₁ to C₄ alkyl group, and n is an integer of 1 to 3.

More specifically, the alicyclic epoxy group included in R¹ of Chemical Formula 1 preferably has an alicyclic structure formed by a C₃ to C₈ alicyclic alkyl group. Here, in the C₃ to C₅ alicyclic structure, curling may occur due to a decrease in intermolecular interval, and in the C₇ to C₈ alicyclic structure, an epoxy curing reaction may slowly progress, and thus, in order to increase the curing rate or reduce the curling, the use of a C₆ alicyclic epoxy group is preferable, but the present invention is not necessarily limited thereto.

In the present invention, the case where Chemical Formula 1 is an epoxy-based monomer is very meaningful because curling may be prevented and high surface hardness may be ensured by virtue of low curing shrinkage. If Chemical Formula 1 is an acrylic monomer, a high curing rate and high hardness may result, but the likelihood of curling may increase due to high shrinkage. Also if Chemical Formula 1 is an isocyanate-based monomer, high flexibility may be obtained due to a high elastic modulus, and thus the likelihood of curling may decrease but low surface hardness may result.

In the present invention, Chemical Formula 1 is an epoxy-based monomer, and thus high surface hardness may be exhibited compared to the isocyanate group, and low curing shrinkage may be shown compared to the acrylic group, thereby preventing curling. In particular, since Chemical Formula 1 of the present invention is an alicyclic epoxy-based monomer, an intermolecular space may be favorably ensured upon curing compared to a linear epoxy-based monomer, whereby the resin composition for a hard coating of the present invention may suppress curing shrinkage, thus effectively preventing curling. Thereby, the siloxane resin of the present invention enables siloxane molecules having various molecular weights to be densely crosslinked upon photopolymerization or thermal polymerization, ultimately obtaining a hard coating cured product having high hardness.

Here, since curling is essentially generated upon curing shrinkage, in the present invention, the siloxane resin, configured such that compounds including not only the alkoxysilane but also the alkoxy metal compound of Chemical Formula 2 are chemically bound, is used as a main component of the hard coating resin composition. Specifically, the structure in which the alkoxysilane and the alkoxy metal compound are bound is included in the molecule thereof, thus easily ensuring the intermolecular space due to the metal element, whereby the hard coating resin composition of the present invention is able to minimize curing shrinkage to thus drastically reduce curling.

<Chemical Formula 2> M(OR³)ₘ

In Chemical Formula 2, R³ is a linear or branched C₁ to C₄ alkyl group, M is at least one metal element selected from the group consisting of aluminum, titanium and zinc, and m is an integer of 2 to 4.

In the present invention, it is required that the alkoxy metal compound is contained in an amount of 0.2 mol% to 5.0 mol% based on the total molar amount of the alkoxysilane and the alkoxy metal compound, therefore ease of processing may be ensured and curling may be effectively prevented. If the amount of the alkoxy metal compound is less than 0.2 mol%, prevention of curling may become insignificant. Here, when the reaction temperature is lowered or polymerization is stopped within a short time, the metal compound may be added up to 5.0 mol%. If the amount thereof exceeds 5.0 mol%, gelation may be rapidly progressed, thus increasing the likelihood of quickly raising the viscosity of the resin, and processability may be remarkably decreased due to high solvent resistance, making it impossible to sufficiently carry out the reaction, whereby the extent of increasing surface hardness may be not great. Hence, the amount of the alkoxy metal compound preferably falls in the range of 0.2 mol% to 3.0 mol%.

For reference, FIG. 1 shows a reaction mechanism using a sol-gel process in the chemical reaction of the alkoxysilane and the alkoxy metal compound according to the present invention, in which the siloxane resin may be obtained by repeating the reaction of Route 1 or Route 2.

In the present invention, the reaction for forming the siloxane resin may be carried out at room temperature, and in order to promote the reaction, stirring at 50°C to 120°C for 1 hr to 120 hr may be conducted. Also, a catalyst for hydrolysis and condensation reaction may be used, and examples thereof may include an acid catalyst, such as hydrochloric acid, acetic acid, hydrogen fluoride, nitric acid, sulfuric acid, and hydroiodic acid, a base catalyst, such as ammonia, potassium hydroxide, sodium hydroxide, barium hydroxide, and imidazole, and an ion exchange resin, such as Amberite, which may be used alone or in combination. The amount of the catalyst is not particularly limited, but may be 0.0001 to about 10 parts by weight based on 100 parts by weight of the siloxane resin.

When the hydrolysis and condensation reaction are carried out, an alcohol byproduct may be produced, and the reverse reaction may be decreased by removing the byproduct, and thus the forward reaction may be more quickly carried out, making it possible to control the reaction rate. After the termination of the reaction, the byproduct may be removed by applying heat under reduced pressure.

The siloxane resin synthesized by the condensation reaction may be adjusted in viscosity and curing rate by the monomers added for the reaction, thereby providing an optimal resin composition suitable for end use. Also, the siloxane resin obtained through the above reaction is able to ensure an intermolecular space upon crosslinking, thus preventing curling due to curing shrinkage and realizing high surface hardness by virtue of the crosslinkage and the metal element.

Thereby, the siloxane resin of the present invention does not include the compound of Chemical Formula 3, and has a weight average molecular weight of 5,000 to 22,000 and a polydispersity index (PDI) of 1.5 to 3.1,.

In the present invention, the molecular weight and the PDI (Mw/Mn) are obtained by applying a weight average molecular weight (Mw) and a number average molecular weight (Mn), as converted in terms of polystyrene standard by gel permeation chromatography (GPC) (e2695, made by Waters). More preferably, a polymer was dissolved at a concentration of 1% in tetrahydrofuran, injected in an amount of 20 *µ*ℓ into GPC at a flow rate of 1.0 mL/min, and analyzed at 30°C. Also, two Styragel HR3 columns, available from Waters, were connected in series, an RI detector (available from Waters, 2414) was used, and measurement was performed at 40°C. Also, the measured weight average molecular weight was divided by the number average molecular weight to obtain PDI.

Furthermore, the hard coating composition of the present invention includes, as a first component, the siloxane resin, and as a second component, at least one of an epoxy resin and an acrylic resin. More specifically, the second component is a monomer or an oligomer having at least one functional group selected from among an epoxy group, an oxetane group, an acrylate group, a methacrylate group, a urethane acrylate group and an ethylene oxide (EO)-added acrylate group.

In the present invention, when the second component is included, bonding of the siloxane resin and the monomer or of the siloxane resin and the oligomer may occur, and thus a linear structure is further lengthened, and thus, the intermolecular interval may be increased due to the monomer or oligomer while the hardness exhibited by the siloxane resin is maintained unchanged, compared to when the second component is not added, thereby further increasing the flexibility of a cured film.

In the present invention, the epoxy resin may be at least one selected from the group consisting of a glycidyl-type epoxy resin, an alicyclic epoxy resin and an oxetane-based resin. Here, the glycidyl-type epoxy resin may be any one selected from among a bisphenol A epoxy resin, a bisphenol F epoxy resin, a bisphenol S epoxy resin, a naphthalenic epoxy resin or hydrogenated products thereof; an epoxy resin having a dicyclopentadiene backbone; an epoxy resin having a triglycidyl isocyanurate backbone; an epoxy resin having a cardo backbone; and an epoxy resin having a polysiloxane structure.

Also, the alicyclic epoxy resin may be 3,4-epoxycyclohexylmethyl-3',4'-epoxycyclohexane carboxylate, 1,2,8,9-diepoxylimonene, ε-caprolactone oligomer, both ends of which are respectively esterified with 3,4-epoxycyclohexylmethanol and 3,4-epoxycyclohexane carboxylic acid, or an epoxy resin having a hydrogenated bisphenol A backbone, and the oxetane-based resin may be an oxetane resin having a hydroxyl structure, an ether-based oxetane resin, or an oxetane resin having a methoxy methylbenzene structure.

Also, in the present invention, a specific example of the acrylic resin may include at least one selected from among bisphenol-A ethylene oxide diacrylate, bisphenol-A ethylene oxide dimethacrylate, bisphenol-A ethoxylate diacrylate, bisphenol-A ethoxylate diacrylate, bisphenol-A polyethoxylate diacrylate, bisphenol-A diacrylate, bisphenol-S diacrylate, dicyclopentadienyl diacrylate, pentaerythritol triacrylate, tris(2-hydroxyethyl)isocyanurate triacrylate, pentaerythritol tetraacrylate, bisphenol-A dimethacrylate, bisphenol-S dimethacrylate, dicyclopentadienyl dimethacrylate, pentaerythritol trimethacrylate, tris(2-hydroxyethyl)isocyanurate trimethacrylate and pentaerythritol tetramethacrylate, and commercially available acrylic resin products may be utilized.

In the present invention, the epoxy resin or acrylic resin may be used alone or in combination of two or more thereof. In this case, however, the compatibility of resins that are mixed may decrease, and thus the uniformity of a coating film may decrease. Hence, resins are preferably used alone or in combination of three or less.

The first component and the second component are preferably mixed at a weight ratio of 9:1 to 6:4 in the resin composition for a hard coating of the present invention. If the amount of the siloxane resin exceeds the above range, superior hardness, wear resistance and heat resistance may be obtained but flexibility may become poor, and thus cracking may occur during the cutting process after the hard coating process. If the amount of the epoxy resin or acrylic resin exceeds the above range, hardness, which is essential for a hard coating layer, cannot be obtained.

Meanwhile, the resin composition for a hard coating according to the present invention may further include an initiator for the polymerization of the siloxane resin, in addition to the first component and the second component, and examples of the initiator may include a photopolymerization initiator such as an organometallic salt, a thermal polymerization initiator such as amine or imidazole, or a cationic polymerization initiator. The amount of the initiator may be about 0.5 to 5 parts by weight based on 100 parts by weight of the resin composition. If the amount thereof is less than 0.5 parts by weight, a period of time for curing a hard coating layer must be increased in order to obtain sufficient hardness, undesirably lowering processing efficiency. On the other hand, if the amount thereof exceeds 5 parts by weight, yellowness of the hard coating layer may increase, making it difficult to obtain a transparent coating layer.

In the present invention, the resin composition for a hard coating may further include at least one selected from the group consisting of a surfactant, an antioxidant and a leveling agent, as necessary, in order to exhibit predetermined functions. Particularly, an organic solvent may be further added to control the viscosity of the siloxane resin to thus facilitate the processing and adjust the thickness of the coating film.

The amount of the organic solvent that is added is not particularly limited, and the organic solvent may include at least one selected from among ketones such as acetone, methyl ethyl ketone, methyl butyl ketone and cyclohexanone, cellosolves such as methyl cellosolve and butyl cellosolve, ethers such as ethyl ether and dioxane, alcohols such as isobutyl alcohol, isopropyl alcohol, butanol and methanol, halogenated hydrocarbons such as dichloromethane, chloroform and trichloroethylene, and hydrocarbons such as n-hexane, benzene and toluene.

Accordingly, the present invention addresses a hard coating film comprising a substrate film and a coating layer formed on at least one surface of the substrate film by curing the resin composition for a hard coating, and the hard coating film of the present invention may exhibit superior physical properties such as hardness, adhesion, bending resistance, chemical resistance and wear resistance, and may prevent curling upon the manufacturing process and the heating process, cracking due to bending upon processing, and peeling.

More specifically, the hard coating film of the present invention has a surface hardness of 4H to 9H in accordance with ASTM D3363 in the direction in which the coating layer is formed. Also, a maximum curl value that an edge of the hard coating film curls away from the plane may be 30 mm after allowing the film to stand at 25°C and 50% RH for 24 hr based on an area of 100 mm × 100 mm when including the alkoxysilane of Chemical Formula 3, whereby the hard coating film of the invention may be efficiently applied as a display protection film. Also, when the second component is further mixed, the minimum curvature radius of the hard coating film that does not crack the coating layer upon bending in the opposite direction of the coating surface is about 2 mm to 6 mm, thus exhibiting excellent bendability, resulting in desired flexibility.

In the present invention, before curing through photopolymerization or thermal polymerization, the surface is made uniform through additional thermal treatment, thereby further increasing the hardness of the hard coating layer. With regard to the photopolymerization, the above thermal treatment may be conducted at 40°C to about 200°C for 2 min to 60 min depending on the type of substrate, and with regard to the thermal polymerization, the above thermal treatment may be conducted at 60°C to about 300°C for 2 min to 60 min depending on the type of substrate, but the present invention is not limited thereto. After the thermal treatment, photopolymerization is performed at 50 mJ/cm² to 20,000 mJ/cm², and preferably 200 mJ/cm² to 5,000 mJ/cm², in order to sufficiently obtain hardness and prevent yellowing.

A process of applying the hard coating resin composition on a substrate may be performed using any one selected from among spraying, dip coating, spin coating, die coating, comma coating, screen coating, inkjet printing, pad printing, knife coating, kiss coating, bar coating and gravure coating. The thickness of the hard coating layer formed of the hard coating resin composition may be easily adjusted depending on the kind of substrate or end use thereof. In the present invention, the thickness thereof may range from 2 to 60 *µ*m, and preferably 10 to 30 *µ*m, thereby ensuring both hardness and bendability of the hard coating film.

Although not being necessarily limited thereto, in the present invention, the substrate film may be configured such that organic synthetic resin films, including a polyethylene sulfonate (PES) film, a polyethylene terephthalate (PET) film, polystyrene (PS), methyl methacrylate-styrene (MS), a polycarbonate (PC) film, a polymethylmethacrylate (PMMA) film, Surlyn (made by B.F. Goodrich, USA) and a polyimide (PI) film, may be provided alone or stacked in two or more layers.

Also, the resin composition for a hard coating of the present invention may be applied on an inorganic substrate such as glass, quartz, a glass wafer and a silicon wafer depending on the purpose of the invention, thus forming a hard coating layer.

### Mode for Invention

A better understanding of the present invention may be obtained through the following examples, which are set forth to illustrate, but are not to be construed as limiting the scope of the present invention.

### Example 1-1. Formation of coating cured product through photocuring

227.96 mL of KBM-303 (available from Shinetsu), 2.96 mL of titanium isopropoxide (available from Sigma-Aldrich) and 27.02 mL of H₂O were mixed, placed in a 500 mL flask, added with 0.2 g of sodium hydroxide as a catalyst, stirred at 60°C for 24 hr, and then filtered using a 0.45 *µ*m Teflon filter, thus obtaining a siloxane resin having titanium covalently bonded thereto. The molecular weight of the resin was measured using GPC, with a number average molecular weight of 7245, a weight average molecular weight of 20146, and a polydispersity index (PDI, M_{w}/Mₙ) of 2.78.

Next, a photoinitiator, IRGACURE 250 (available from BASF), was added in an amount of 3 parts by weight based on 100 parts by weight of the above resin, and the resulting resin composition was applied on a colorless polyimide surface at respective thicknesses of 10, 20, and 30 *µ*m, and photocured through exposure under a UV lamp at a wavelength of 315 nm for 30 sec, thus manufacturing a high-hardness coating cured product.

### Example 1-2. Formation of coating cured product through thermosetting

A siloxane resin was obtained in the same manner as in Example 1-1, after which a thermal polymerization initiator, 2-ethyl-4-methylimidazole (available from Sigma-Aldrich), in lieu of the photoinitiator, was added in an amount of 2 parts by weight based on 100 parts by weight of the resin, and the resulting resin composition was applied on a colorless polyimide surface at respective thicknesses of 10, 20, and 30 *µ*m, and then thermally treated at 120°C for 4 hr, thereby manufacturing a high-hardness coating cured product.

### Example 1-3. Addition of aluminum alkoxide

A resin was prepared in the same manner as in Example 1-1, with the exception that a siloxane resin having a number average molecular weight of 7027, a weight average molecular weight of 21325, and a PDI of 3.03 was obtained by adding 1.62 g of aluminum ethoxide (available from Sigma-Aldrich) in lieu of 2.96 mL of titanium isopropoxide, after which a coating process was performed, thus manufacturing a coating cured product.

### Example 1-4. Addition of zinc alkoxide

A resin was prepared in the same manner as in Example 1-1, with the exception that a siloxane resin having a number average molecular weight of 7312, a weight average molecular weight of 20072, and a PDI of 2.74 was obtained by adding 1.27 g of zinc methoxide (available from Sigma-Aldrich) in lieu of 2.96 mL of titanium isopropoxide, after which a coating process was performed, thus manufacturing a coating cured product.

### Example 1-5. Change in amount of titanium alkoxide (0.1 mol%)

A resin was prepared in the same manner as in Example 1-1, with the exception that a siloxane resin having a number average molecular weight of 7592, a weight average molecular weight of 20324, and a PDI of 2.67 was obtained by adding 0.30 mL of titanium isopropoxide (available from Sigma-Aldrich), after which a coating process was performed, thus manufacturing a coating cured product.

### Example 1-6. Change in amount of titanium alkoxide (0.5 mol%)

A resin was prepared in the same manner as in Example 1-1, with the exception that a siloxane resin having a number average molecular weight of 6985, a weight average molecular weight of 19952, and a PDI of 2.85 was obtained by adding 1.48 mL of titanium isopropoxide (available from Sigma-Aldrich), after which a coating process was performed, thus manufacturing a coating cured product.

### Example 1-7. Change in amount of titanium alkoxide (1.5 mol%)

A resin was prepared in the same manner as in Example 1-1, with the exception that a siloxane resin having a number average molecular weight of 7428, a weight average molecular weight of 20523, and a PDI of 2.76 was obtained by adding 4.44 mL of titanium isopropoxide (available from Sigma-Aldrich), after which a coating process was performed, thus manufacturing a coating cured product.

### Example 1-8. Change in amount of titanium alkoxide (1.8 mol%)

A resin was prepared in the same manner as in Example 1-1, with the exception that a siloxane resin having a number average molecular weight of 7790, a weight average molecular weight of 21338, and a PDI of 2.74 was obtained by adding 5.33 mL of titanium isopropoxide (available from Sigma-Aldrich), after which a coating process was performed, thus manufacturing a coating cured product.

### Example 1-9. Change in amount of titanium alkoxide (2.0 mol%) and control of reaction time

A siloxane resin having a number average molecular weight of 3438, a weight average molecular weight of 5151, and a PDI of 1.5 was obtained in the same manner as in Example 1-1, with the exception that 5.92 mL of titanium isopropoxide (available from Sigma-Aldrich) was added and the reaction was carried out for 5 hr, after which a coating process was performed, thus manufacturing a coating cured product.

### Example 1-10. Change in amount of titanium alkoxide (5.0 mol%) and control of reaction time

A siloxane resin having a number average molecular weight of 2654, a weight average molecular weight of 5600, and a PDI of 2.1 was obtained in the same manner as in Example 1-1, with the exception that 14.80 mL of titanium isopropoxide (available from Sigma-Aldrich) was added and the reaction was carried out for 2 hr, after which a coating process was performed, thus manufacturing a coating cured product.

### Comparative Example 1-1. Coating cured product through photocuring

A siloxane resin having a number average molecular weight of 5395, a weight average molecular weight of 15116, and a PDI of 2.80 was obtained in the same manner as in Example 1-1, with the exception that titanium isopropoxide was not added, after which a coating process was performed under the same conditions as in Example 1-1, thus manufacturing a coating cured product including the siloxane resin obtained as above.

### Comparative Example 1-2. Coating cured product through thermosetting

A coating cured product was manufactured using the same resin as Comparative Example 1-1 and through the thermosetting coating process as in Example 1-2.

### Comparative Example 1-3. Change in amount of titanium alkoxide (5.5 mol%) and control of reaction time

A resin was prepared in the same manner as in Example 1-1, with the exception that 16.28 mL of titanium isopropoxide (available from Sigma-Aldrich) was added and the reaction time was controlled to less than 1 hr, after which the resin was attempted to be applied on a film, but control of gelation of the resin was difficult, and thus solubility in an organic solvent was drastically decreased, and thus the resulting resin composition was unsuitable for a coating process.

Except for Comparative Example 1-3, which was unsuitable for the coating process, the properties of Examples 1-1 to 1-10 and Comparative Examples 1-1 and 1-2 were measured as follows. The results are shown in Table 1 below.
(1) Surface hardness: Pencil hardness was measured at a rate of 180 mm/min under a load of 750 gf using a pencil hardness meter available from IMOTO, Japan, in accordance with ASTM D3363.
(2) Curling: When a coating film was cut to a size of 30 cm × 21 cm and placed on a plane, the maximum distance in which each edge of the coating film curled away from the plane was measured.
(3) Chemical resistance: A piece of film cut to a size of 1 cm × 1 cm was fixed to a slide glass using a piece of adhesive tape (3M) so that the coating surface thereof was disposed upward, and was then dipped in each of 0.05% acetone, NMP, and KOH aqueous solutions for 12 hr, after which whether the coating layer was stripped was observed. The case where stripping occurred was evaluated as poor and the case where no stripping occurred was evaluated as good. The results are shown in Table 1 below.

**[Table 1]**

| | Alkoxy metal | Surface hardness | | | Curling | | | Chemical resistance | | |
|---|---|---|---|---|---|---|---|---|---|---|
| | | 10 *µ*m | 20 *µ*m | 30 *µ*m | 10 *µ*m | 20 *µ*m | 30 *µ*m | 10 *µ*m | 20 *µ*m | 30 *µ*m |
| Ex.1-1 | 1 mol% | 7H | 8H | 9H | 0 cm | 0 cm | 0.5 cm | Good | Good | Good |
| Ex.1-2 | 1 mol% | 5H | 6H | 6H | 0 cm | 0 cm | 0 cm | Good | Good | Good |
| Ex.1-3 | 1 mol% | 7H | 8H | 8H | 0 cm | 0 cm | 0.7 cm | Good | Good | Good |
| Ex.1-4 | 1 mol% | 7H | 8H | 8H | 0 cm | 0 cm | 0.6 cm | Good | Good | Good |
| Ex.1-5 | 0.1 mol% | 6H | 7H | 7H | 1 cm | 1.5 cm | 2.0 cm | Good | Good | Good |
| Ex.1-6 | 0.5 mol% | 6H | 7H | 8H | 0.7 cm | 1.0 cm | 1.8 cm | Good | Good | Good |
| Ex.1-7 | 1.5 mol% | 7H | 8H | 9H | 0 cm | 0 cm | 0.5 cm | Good | Good | Good |
| Ex.1-8 | 1.8 mol% | 7H | 8H | 9H | 0 cm | 0 cm | 0.5 cm | Good | Good | Good |
| Ex.1-9 | 2 mol% | 7H | 8H | 9H | 0 cm | 0 cm | 0.5 cm | Good | Good | Good |
| Ex.1-10 | 5 mol% | 7H | 8H | 9H | 0 cm | 0 cm | 0.8 cm | Good | Good | Good |
| C.Ex.1-1 | - | 5H | 5H | 6H | 2 cm | 3 cm | 5 cm | Good | Good | Good |
| C.Ex.1-2 | - | 2H | 3H | 3H | 0 cm | 0 cm | 0 cm | Good | Good | Good |

As is apparent from the results of measurement of surface hardness depending on the thickness, surface hardness was increased and curling was reduced in Examples 1-1 to 1-10 using the alkoxy metal, unlike Comparative Examples 1-1 and 1-2. Here, curing through photocuring (Example 1-1), rather than thermosetting (Example 1-2), was more favorable from the aspect of surface hardness. In contrast, curling did not occur even at a thickness of 30 *µ*m upon thermosetting, and thus thermosetting was more favorable in terms of preventing curling.

Furthermore, with regard to the curling in Examples 1-5 to 1-10, when the amount of alkoxy metal was further increased, the intermolecular distance in the molecular structure was ensured, thus further reducing curling. Here, when the amount of alkoxy metal was 2 mol% or more (Examples 1-9 and 1-10), the reaction time was shortened, thereby increasing surface hardness and preventing curling, but in Comparative Example 1-3, in which the amount of alkoxy metal was greater than 5.0 mol%, when the reaction was stopped before gelation, sufficient reaction did not occur, or when the reaction time was minimized in consideration of sufficient reaction, gelation could not be suppressed, and thus the viscosity of the resin was greatly increased, making it difficult to perform the coating process.

### Polymerization Example 1

KBM-303 (available from Shinetsu), titanium isopropoxide (available from Sigma-Aldrich) and H₂O were mixed at a ratio of 245.2 g : 1.4 g : 27.2 mL, placed in a 500 mL flask, added with 0.1 g of sodium hydroxide (available from Sigma-Aldrich) as a catalyst, and reacted with stirring at 60°C for 10 hr while removing the produced alcohol using a Dean-Stark device, thus obtaining a siloxane resin polymer 1.

### Polymerization Example 2

KBM-303 (available from Shinetsu), titanium isopropoxide (available from Sigma-Aldrich) and H₂O were mixed at a ratio of 241.5 g : 5.7 g : 27.2 mL, placed in a 500 mL flask, added with 0.1 g of sodium hydroxide (available from Sigma-Aldrich) as a catalyst, and reacted with stirring at 60°C for 10 hr while removing the produced alcohol using a Dean-Stark device, thus obtaining a siloxane resin polymer 2.

### Polymerization Example 3

KBM-303 (available from Shinetsu), titanium isopropoxide (available from Sigma-Aldrich) and H₂O were mixed at a ratio of 234.1 g : 14.2 g : 27.2 mL, placed in a 500 mL flask, added with 0.1 g of sodium hydroxide (available from Sigma-Aldrich) as a catalyst, and reacted with stirring at 60°C for 10 hr while removing the produced alcohol using a Dean-Stark device, thus obtaining a siloxane resin polymer 3.

### Polymerization Example 4

KBM-303 (available from Shinetsu), aluminum ethoxide (available from Sigma-Aldrich) and H₂O were mixed at a ratio of 259.8 mL : 1.62 g : 27.2 mL, placed in a 500 mL flask, added with 0.1 g of sodium hydroxide as a catalyst, and reacted with stirring at 60°C for 10 hr while removing the produced alcohol using a Dean-Stark device, thus obtaining a siloxane resin polymer 4.

### Comparative Polymerization Example 1

KBM-303 (available from Shinetsu) and H₂O were mixed at a ratio of 246.4 g : 27.2 mL, placed in a 500 mL flask, added with 0.1 g of sodium hydroxide as a catalyst, and reacted with stirring at 60°C for 10 hr while removing the produced alcohol using a Dean-Stark device, thus obtaining a siloxane resin polymer 5.

### Comparative Polymerization Example 2

KBM-303 (available from Shinetsu), titanium isopropoxide (available from Sigma-Aldrich) and H₂O were mixed at a ratio of 231.6 g : 17.1 g : 27.2 mL, placed in a 500 mL flask, added with 0.1 g of sodium hydroxide (available from Sigma-Aldrich) as a catalyst, and reacted with stirring at 60°C for 10 hr while removing the produced alcohol using a Dean-Stark device, thus obtaining a siloxane resin polymer 6.

Polymerization Examples 1 to 4 and Comparative Polymerization Examples 1 and 2 are summarized as follows.

**[Table 3]**

| No. | Alkoxy metal compound | Weight average molecular weight | Polydispersity index |
|---|---|---|---|
| P.Ex.1 | 0.5 mol% titanium isopropoxide | 5,800 | 1.8 |
| P.Ex.2 | 2 mol% titanium isopropoxide | 8,200 | 2.2 |
| P.Ex.3 | 5 mol% titanium isopropoxide | 20,500 | 2.8 |
| P.Ex.4 | 1 mol% aluminum ethoxide | 19,750 | 2.1 |
| Comp.P.Ex.1 | Not added | 8,700 | 1.7 |
| Comp.P.Ex.2 | 6 mol% titanium isopropoxide | Not measured due to gelation | |

### Example 3-1

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Polymerization Example 1 at a weight ratio of 3:1 (siloxane resin = 3). The mixture thus obtained was added with, based on the total weight thereof, 40 wt% of methyl ethyl ketone as a dilution solvent, 1 wt% of triarylsulfonium hexafluoroantimonate (available from Sigma-Aldrich) as a photoinitiator, and 0.4 wt% of a silicone-based leveling agent (available from BYK, BYK-333) as an additive, and stirred for 1 hr using a stirrer, thus preparing a hard coating resin composition.

### Example 3-2

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Polymerization Example 2 at a weight ratio of 9:1 (siloxane resin = 9). The subsequent procedures were performed in the same manner as in Example 3-1, thus preparing a hard coating resin composition.

### Example 3-3

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Polymerization Example 2 at a weight ratio of 3:1 (siloxane resin = 3). The subsequent procedures were performed in the same manner as in Example 3-1, thus preparing a hard coating resin composition.

### Example 3-4

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Polymerization Example 2 at a weight ratio of 3:2 (siloxane resin = 3). The subsequent procedures were performed in the same manner as in Example 3-1, thus preparing a hard coating resin composition.

### Example 3-5

Phenyl epoxy acrylate (available from Miwon, PE110) and bisphenol A EO-added diacrylate (available from Miwon, M2100) were mixed at a weight ratio of 1:1, and this mixture was further mixed with the siloxane resin of Polymerization Example 2 at a weight ratio of 3:1 (siloxane resin = 3). The mixture thus obtained was added with, based on the total weight thereof, 40 wt% of methyl ethyl ketone as a dilution solvent, a photoinitiator comprising 0.67 wt% of triarylsulfonium hexafluoroantimonate (available from Sigma-Aldrich) and 0.33 wt% of 1-hydroxycyclohexyl phenyl ketone (available from BASF, Irgacure 184), and 0.4 wt% of a silicone-based leveling agent (available from BYK, BYK-333) as an additive, and stirred for 1 hr using a stirrer, thus preparing a hard coating resin composition.

### Example 3-6

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Polymerization Example 3 at a weight ratio of 3:1 (siloxane resin = 3). The subsequent procedures were performed in the same manner as in Example 3-1, thus preparing a hard coating resin composition.

### Example 3-7

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Polymerization Example 4 at a weight ratio of 3:1 (siloxane resin = 3). The subsequent procedures were performed in the same manner as in Example 3-1, thus preparing a hard coating resin composition.

### Comparative Example 3-1

The siloxane resin of Polymerization Example 2 was added with, based on the weight thereof, 40 wt% of methyl ethyl ketone as a dilution solvent, 1 wt% of triarylsulfonium hexafluoroantimonate (available from Sigma-Aldrich) as a photoinitiator, and 0.4 wt% of a silicone-based leveling agent (available from BYK, BYK-333) as an additive, and stirred for 1 hr using a stirrer, thus preparing a hard coating resin composition.

### Comparative Example 3-2

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Polymerization Example 2 at a weight ratio of 1:1. The subsequent procedures were performed in the same manner as in Example 3-1, thus preparing a hard coating resin composition.

### Comparative Example 3-3

The siloxane resin of Comparative Polymerization Example 1 was added with, based on the weight thereof, 40 wt% of methyl ethyl ketone as a dilution solvent, 1 wt% of triarylsulfonium hexafluoroantimonate (available from Sigma-Aldrich) as a photoinitiator, and 0.4 wt% of a silicone-based leveling agent (available from BYK, BYK-333) as an additive, and stirred for 1 hr using a stirrer, thus preparing a hard coating resin composition.

### Comparative Example 3-4

Ethyl oxetanyl methyl ether (available from ToaGosei, OXT221) and cycloaliphatic epoxide (available from Daicel, Celloxide 2021P) were mixed at a weight ratio of 1:1, and this mixture was further mixed with the siloxane resin of Comparative Polymerization Example 1 at a weight ratio of 3:1. The subsequent procedures were performed in the same manner as in Example 3-1, thus preparing a hard coating resin composition.

The resin composition of each of Examples 3-1 to 3-7 and Comparative Examples 3-1 to 3-4 was applied on one surface of, as a substrate, a polyethylene terephthalate film having a thickness of 75 *µ*m (made by Kolon, HP34P), dried in an oven at 80°C for 30 min, irradiated with UV light of 1,000 mJ/cm² at in an amount of 80 mW/cm² using a UV irradiator in the direction in which the hard coating composition was applied, and thermally treated in an oven at 85°C for 24 hr, thus manufacturing two hard coating films having thicknesses of 85 *µ*m and 100 *µ*m. Subsequently, the hard coating films were evaluated to determine the properties thereof through the following methods.
(1) Surface hardness: Pencil hardness was measured at a rate of 180 mm/min under a load of 750 gf using a pencil hardness meter available from IMOTO, Japan, in accordance with ASTM D3363.
(2) Bendability: Rods, respective radii of which were increased by 1 mm, were wound with the hard coating film in which the coating layer was positioned outward, and the minimum radius at which no cracking occurred on the coating surface was measured.
(3) Curling: When a coating film was cut to a size of 100 mm × 100 mm and then placed on a plane, the maximum distance in which each edge of the coating film curled away from the plane was measured.

**[Table 4]**

| | Film thickness: 85 *µ*m | | | Film thickness: 100 *µ*m | | |
|---|---|---|---|---|---|---|
| | Pencil hardness | Bendability | Curling | Pencil hardness | Bendability | Curling |
| Ex.3-1 | 4H | Radius 3 mm Good | 0 cm | 6H | Radius 6 mm Good | 0 cm |
| Ex.3-2 | 4H | Radius 3 mm Good | 0 cm | 6H | Radius 6 mm Good | 0 cm |
| Ex.3-3 | 4H | Radius 2 mm Good | 0 cm | 6H | Radius 5 mm Good | 0 cm |
| Ex.3-4 | 4H | Radius 2 mm Good | 0 cm | 6H | Radius 5 mm Good | 0 cm |
| Ex.3-5 | 4H | Radius 2 mm Good | 0 cm | 6H | Radius 5 mm Good | 0 cm |
| Ex.3-6 | 4H | Radius 2 mm Good | 0 cm | 6H | Radius 4 mm Good | 0 cm |
| Ex.3-7 | 4H | Radius 2 mm Good | 0 cm | 6H | Radius 5 mm Good | 0 cm |
| C.Ex.3-1 | 4H | Radius 6 mm Good | 0.2 cm | 6H | Radius 12 mm Good | 0.4 cm |
| C.Ex.3-2 | H | Radius 2 mm Good | 0.2 cm | 3H | Radius 5 mm Good | 0.5 cm |
| C.Ex.3-3 | 3H | Radius 12 mm Good | 2.5 cm | 5H | Radius 22 mm Good | 5.2 cm |
| C.Ex.3-4 | 3H | Radius 8 mm Good | 1.5 cm | 5H | Radius 15 mm Good | 4.5 cm |

As is apparent from the results of Table 4, the hard coating films of Examples 3-1 to 3-7 exhibited superior pencil hardness and bendability and reduced curling, and even when a rod having a radius of 6 mm or less was wound therewith, no cracking occurred and thus excellent bendability resulted.

However, in Comparative Example 3-1, in which the coating layer was formed exclusively of the siloxane resin of Polymerization Example, bendability was remarkably deteriorated, and in Comparative Example 3-2, in which the siloxane resin was used in a very small amount, surface hardness was not ensured. Also, in Comparative Examples 3-3 and 3-4, in which the siloxane resin of Comparative Polymerization Example 1 was used, the amount of metal contained in siloxane was insignificant, and thus curling was not reduced upon the formation of the hard coating layer.

Therefore, the hard coating film manufactured using the hard coating resin composition of the present invention can be found experimentally to exhibit superior strength and bendability and reduced curling to thus be suitable for use as a display protection film.

## Claims

1. A resin composition for a hard coating, comprising:
a siloxane resin configured such that compounds including an alkoxysilane of Chemical Formula 1 below and an alkoxy metal compound of Chemical Formula 2 below are chemically bound,
wherein the siloxane resin does not include a chemically bound compound of Chemical Formula 3 and has a weight average molecular weight of 5,000 to 22,000 and a polydispersity index (PDI) of 1.5 to 3.1, wherein the molecular weight and the PDI (Mw/Mn) are obtained by applying a weight average molecular weight (Mw) and a number average molecular weight (Mn), as converted in terms of polystyrene standard by gel permeation chromatography, and
wherein the alkoxy metal compound is contained in an amount of 0.2 mol% to 5.0 mol% based on a total molar amount of the alkoxysilane and the alkoxy metal compound:
<Chemical Formula 1> R¹ₙSi(OR²)₄₋ₙ
<Chemical Formula 2> M(OR³)ₘ
<Chemical Formula 3> Si(OR³)₄
in Chemical Formulas 1 and 2, R¹ is a linear C₁ to C₃ alkyl group having an alicyclic epoxy group, R² is a linear or branched C₁ to C₄ alkyl group, R³ is a linear or branched C₁ to C₄ alkyl group, M is at least one metal element selected from the group consisting of aluminum, titanium, and zinc, n is an integer of 1 to 3, and m is an integer of 2 to 4, in Chemical Formula 3, R³ is a C₁ to C₄ linear or branched alkyl group.

2. The resin composition of claim 1, wherein the alkoxysilane of Chemical Formula 1 is at least one selected from among 2-(3,4-epoxycyclohexyl)ethyltrimethoxysilane, 2-(3,4-epoxycyclohexyl)ethyltriethoxysilane and 2-(3,4-epoxycyclohexyl)ethyltripropoxysilane.

3. The resin composition of claim 1, wherein the resin composition comprises the siloxane resin as a first component, and further comprises at least one of an epoxy resin and an acrylic resin as a second component, preferably wherein the first component and the second component are mixed at a weight ratio of 9:1 to 6:4.

4. The resin composition of claim 3, wherein the second component is a monomer or an oligomer having at least one functional group selected from among an epoxy group, an oxetane group, an acrylate group, a methacrylate group, a urethane acrylate group, and an ethylene oxide (EO)-added acrylate group.

5. The resin composition of any one of claims 1 to 4, further comprising at least one additive selected from the group consisting of an organic solvent, a photoinitiator, a thermal initiator, an antioxidant, a leveling agent and a coating aid.

6. A hard coating film, comprising:
a substrate film and a hard coating layer formed by curing the resin composition of any one of claims 1 or 2 on at least one surface of the substrate film.

7. The hard coating film of claim 6, wherein the hard coating film has a surface hardness of 4H to 9H in accordance with ASTM D3363 in a direction in which the coating layer is formed.

8. The hard coating film of claim 6, wherein the hard coating film has a minimum curvature radius of 2 to 6 mm, in which the coating layer is not cracked upon bending in a direction opposite the direction in which the coating layer is formed.

## Patentansprüche

1. Harzzusammensetzung für eine harte Beschichtung, umfassend:
ein Siloxanharz, ausgelegt, sodass Verbindungen, einschließlich eines Alkoxysilans der unten folgenden chemischen Formel 1 und einer Alkoxymetallverbindung der unten folgenden chemischen Formel 2, chemisch gebunden sind,
wobei das Siloxanharz keine chemisch gebundene Verbindung der chemischen Formel 3 beinhaltet, und es ein gewichtsmittleres Molekulargewicht von 5.000 bis 22.000 und einen Polydispersitätsindex (PDI) von 1,5 bis 3,1 aufweist, wobei das Molekulargewicht und der PDI (Mw/Mn) durch Anwenden eines gewichtsmittleren Molekulargewichts (Mw) und eines zahlenmittleren Molekulargewichts (Mn) erhalten werden, umgerechnet bezüglich des Polystyrolstandards mittels Gelpermeationschromatographie, und
wobei die Alkoxymetallverbindung in einer Menge von 0,2 Mol-% bis 5,0 Mol-% bezogen auf eine gesamte Molmenge des Alkoxysilans und der Alkoxymetallverbindung enthalten ist:
<Chemische Formel 1> R¹ₙSi(OR²)₄₋ₙ
<Chemische Formel 2> M(OR³)ₘ
<Chemische Formel 3> Si(OR³)₄
wobei in den chemischen Formeln 1 und 2 R¹ eine lineare C₁- bis C₃-Alkylgruppe mit einer alicyclischen Epoxygruppe ist, R² eine lineare oder verzweigte C₁- bis C₄-Alkylgruppe ist, R³ eine lineare oder verzweigte C₁- bis C₄-Alkylgruppe ist, M mindestens ein Metallelement, ausgewählt aus der Gruppe bestehend aus Aluminium, Titan und Zink ist, n eine ganze Zahl von 1 bis 3 ist, und m eine ganze Zahl von 2 bis 4 ist, in der chemischen Formel 3 R³ eine lineare oder verzweigte C₁- bis C₄-Alkylgruppe ist.

2. Harzzusammensetzung nach Anspruch 1, wobei das Alkoxysilan der chemischen Formel 1 mindestens eines ist, ausgewählt aus 2-(3,4-Epoxycyclohexyl)ethyltrimethoxysilan, 2-(3,4-Epoxycyclohexyl)ethyltriethoxysilan und 2-(3,4-Epoxycyclohexyl)ethyltripropoxysilan.

3. Harzzusammensetzung nach Anspruch 1, wobei die Harzzusammensetzung das Siloxanharz als eine erste Komponente umfasst und des Weiteren mindestens eines von einem Epoxidharz und einem Acrylharz als eine zweite Komponente umfasst, vorzugsweise wobei die erste Komponente und die zweite Komponente in einem Gewichtsverhältnis von 9:1 bis 6:4 gemischt sind.

4. Harzzusammensetzung nach Anspruch 3, wobei die zweite Komponente ein Monomer oder ein Oligomer mit mindestens einer funktionellen Gruppe ist, die aus einer Epoxygruppe, einer Oxetangruppe, einer Acrylatgruppe, einer Methacrylatgruppe, einer Urethanacrylatgruppe und einer Acrylatgruppe mit addiertem Ethylenoxid (EO) ausgewählt ist.

5. Harzzusammensetzung nach einem der Ansprüche 1 bis 4, des Weiteren umfassend mindestens ein Additiv, ausgewählt aus der Gruppe bestehend aus einem organischen Lösungsmittel, einem Photoinitiator, einem thermischen Initiator, einem Antioxidans, einem Egalisiermittel und einem Beschichtungshilfsmittel.

6. Harter Beschichtungsfilm, umfassend:
einen Substratfilm und eine harte Beschichtungsschicht, die durch Härten der Harzzusammensetzung nach einem der Ansprüche 1 oder 2 auf mindestens einer Oberfläche des Substratfilms gebildet wird.

7. Harter Beschichtungsfilm nach Anspruch 6, wobei der harte Beschichtungsfilm eine Oberflächenhärte von 4H bis 9H gemäß ASTM D3363 in einer Richtung aufweist, in der die Beschichtungsschicht gebildet ist.

8. Harter Beschichtungsfilm nach Anspruch 6, wobei der harte Beschichtungsfilm einen minimalen Krümmungsradius von 2 bis 6 mm aufweist, wobei die Beschichtungsschicht beim Biegen in eine Richtung entgegengesetzt zur Richtung, in der die Beschichtungsschicht gebildet wird, nicht reißt.

## Revendications

1. Composition de résine pour un revêtement dur, comprenant :
une résine de siloxane configurée de telle sorte que des composés comprenant un alcoxysilane de Formule Chimique 1 ci-après et un composé alcoxy métal de Formule Chimique 2 ci-après sont chimiquement liés,
dans laquelle la résine de siloxane ne comprend pas un composé chimiquement lié de Formule Chimique 3 et
a une masse moléculaire moyenne en poids de 5 000 à 22 000 et un indice de polydispersité (PDI) de 1,5 à 3,1, la masse moléculaire et le PDI (Mw/Mn) étant obtenus par application d'une masse moléculaire moyenne en poids (Mw) et d'une masse moléculaire moyenne en nombre (Mn), telles que converties en termes d'étalon polystyrène par chromatographie par perméation de gel, et
dans laquelle le composé alcoxy métal est contenu dans une quantité de 0,2 % en moles à 5,0 % en moles sur la base d'une quantité molaire totale de l'alcoxysilane et du composé alcoxy métal :
<Formule Chimique 1> R¹ₙSi(OR²)₄₋ₙ
<Formule Chimique 2> M(OR³)ₘ
<Formule Chimique 3> Si(OR³)₄
dans les Formules Chimiques 1 et 2, R¹ est un groupe alkyle en C₁ à C₃, linéaire, ayant un groupe époxy alicyclique, R² est un groupe alkyle en C₁ à C₄, linéaire ou ramifié, R³ est un groupe alkyle en C₁ à C₄, linéaire ou ramifié, M est au moins un élément métallique choisi dans le groupe consistant en l'aluminium, le titane et le zinc, n est un entier de 1 à 3 et m est un entier de 2 à 4, dans la Formule Chimique 3, R³ est un groupe alkyle en C₁ à C₄, linéaire ou ramifié.

2. Composition de résine selon la revendication 1, dans laquelle l'alcoxysilane de Formule Chimique 1 est au moins l'un choisi parmi le 2-(3,4-époxycyclohexyl)éthyltriméthoxysilane, le 2-(3,4-époxycyclohexyl)éthyltriéthoxysilane et le 2-(3,4- époxycyclohexyl)éthyltripropoxysilane.

3. Composition de résine selon la revendication 1, dans laquelle la composition de résine comprend la résine de siloxane en tant que premier composant et comprend en outre au moins l'une d'une résine époxy et d'une résine acrylique en tant que second composant, de préférence dans laquelle le premier composant et le second composant sont mélangés dans un rapport en poids de 9:1 à 6:4.

4. Composition de résine selon la revendication 3, dans laquelle le second composant est un monomère ou un oligomère ayant au moins un groupe fonctionnel choisi parmi un groupe époxy, un groupe oxétane, un groupe acrylate, un groupe méthacrylate, un groupe uréthane acrylate et un groupe acrylate additionné d'oxyde d'éthylène (OE).

5. Composition de résine selon l'une quelconque des revendications 1 à 4, comprenant en outre au moins un additif choisi dans le groupe consistant en un solvant organique, un photoinitiateur, un initiateur thermique, un anti-oxydant, un agent nivelant et un auxiliaire de revêtement.

6. Film de revêtement dur, comprenant :
un film de substrat et une couche de revêtement dur formée par durcissement de la composition de résine selon l'une quelconque des revendications 1 ou 2 sur au moins une surface du film de substrat.

7. Film de revêtement dur selon la revendication 6, dans lequel le film de revêtement dur a une dureté de surface de 4H à 9H conformément à ASTM D3363 dans une direction dans laquelle la couche de revêtement est formée.

8. Film de revêtement dur selon la revendication 6, dans lequel le film de revêtement dur a un rayon de courbure minimal de 2 à 6 mm, dans lequel la couche de revêtement n'est pas fissurée lors du pliage dans une direction opposée à la direction dans laquelle la couche de revêtement est formée.
